# EUROPÄISCHE PATENTSCHRIFT

(11) **EP 0 915 807 B1**
(45) Veröffentlichungstag und Bekanntmachung des Hinweises auf die Patenterteilung: **29.10.2003**
(21) Anmeldenummer: 97942842.2
(22) Anmeldetag: 01.08.1997
(51) Int. Cl.: C01B 33/158, C01B 33/154

(54) **VERFAHREN ZUR HERSTELLUNG VON ORGANISCH MODIFIZIERTEN AEROGELEN**
PROCESS FOR PRODUCING ORGANICALLY MODIFIED AEROGEL
PROCEDE DE PREPARATION D'AEROGELS MODIFIES DE MANIERE ORGANIQUE

(30) Priorität: 02.08.1996 DE 19631267
(43) Veröffentlichungstag der Anmeldung: 19.05.1999
(73) Patentinhaber: CABOT CORPORATION, Boston, Massachusetts 02210-2019 (US)
(72) Erfinder: SCHWERTFEGER, Fritz, D-60529 Frankfurt am Main (DE)
(74) Vertreter: Luderschmidt, Schüler & Partner GbR
(86) Internationale Anmeldenummer: EP9704192
(87) Internationale Veröffentlichungsnummer: WO98005591

(56) Entgegenhaltungen:
- EP-A- 0 065 447
- EP-A- 0 690 023
- WO-A-96/22942
- DD-A- 270 289
- DE-A- 3 346 180
- FR-A- 1 450 709
- FR-A- 2 123 399
- PATENT ABSTRACTS OF JAPAN vol. 011, no. 326 (C-454), 23.Oktober 1987 & JP 62 113713 A (OSAKA SODA CO LTD), 25.Mai 1987,

## Beschreibung

Die Erfindung betrifft ein Verfahren zur Herstellung von organisch modifizierten Aerogelen.

Aerogele, insbesondere solche mit Porositäten über 60 % und Dichten unter 0,6 g/cm³, weisen eine äußerst geringe thermische Leitfähigkeit auf und finden deshalb Anwendung als Wärmeisolationsmaterial wie z.B. in der EP-A-0 171 722 beschrieben.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinn, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes weitestgehend entfernt wird. Wird die Flüssigkeit des Gels dagegen unterkritisch, beispielsweise unter Bildung einer Flüssig-Dampf-Grenzphase entfernt, dann bezeichnet man das entstandene Gel vielfach auch als Xerogel.

Bei der Verwendung des Begriffs Aerogele in der vorliegenden Anmeldung handelt es sich um Aerogele im weiteren Sinn, d.h. im Sinn von "Gel mit Luft als Dispersionsmittel".

Darüber hinaus kann man Aerogele grundsätzlich in anorganische und organische Aerogele unterteilen.

Anorganische Aerogele sind schon seit 1931 bekannt (S.S.Kistler, Nature 1931,127,741). Seitdem sind aus unterschiedlichsten Ausgangsmaterialien Aerogele hergestellt worden. Dabei konnten z. B. SiO₂-, Al₂O₃-, TiO₂-, ZrO₂-, SnO₂-, Li₂O-, CeO₂- und V₂O₅- Aerogele sowie Mischungen aus diesen hergestellt werden (H.D. Gesser, P.C.Goswami, Chem.Rev.1989, 89,765ff).

Seit einigen Jahren sind auch organische Aerogele aus unterschiedlichsten Ausgangsmaterialien, wie z.B. aus Melaminformaldehyd, bekannt (R.W. Pekala, J. Mater. Sci. 1989, 24, 3221).

Anorganische Aerogele können dabei auf unterschiedlichen Wegen hergestellt werden.

Zum einen können SiO₂-Aerogele beispielsweise durch saure Hydrolyse und Kondensation von Tetraethylorthosilikat in Ethanol hergestellt werden. Dabei entsteht ein Gel, das durch überkritische Trocknung unter Erhaltung der Struktur getrocknet werden kann. Auf dieser Trocknungstechnik basierende Herstellungsverfahren sind z.B. aus der EP-A-0 396 076 , der WO 92/03378 und der WO 95/06617 bekannt.

Eine prinzipielle Alternative zu diesem mit sehr hohen Kosten und großen verfahrenstechnischen Risiken verbundenen Verfahren bietet ein Verfahren zur unterkritischen Trocknung von SiO₂-Gelen. Das SiO₂-Gel wird dabei durch saure Hydrolyse von Tetraalkoxysilanen in einem geeigneten organischen Lösungsmittel mittels Wasser erhalten. Nach Austausch des Lösungsmittels gegen ein geeignetes organisches Lösungsmittel wird in einem weiteren Schritt das erhaltene Gel mit einem Silylierungsmittel umgesetzt. Das dabei entstehende SiO₂-Gel kann anschließend aus einem organischen Lösungsmittel heraus an der Luft getrocknet werden. Damit lassen sich Aerogele mit Dichten unter 0,4 g/cm³ und Porositäten über 60 % herstellen. Das auf dieser Trocknungstechnik basierende Herstellungsverfahren ist ausführlich in der WO 94/25149 beschrieben.

Die oben beschriebenen Gele können darüber hinaus vor der Trocknung in einer alkohol-wäßrigen Lösung mit Tetraalkoxysilanen versetzt und gealtert werden, um die Gelnetzwerkstärke zu erhöhen, wie z.B. in der WO 92/20623 offenbart.

Die bei den oben beschriebenen Verfahren als Ausgangsmaterialien verwendeten Tetraalkoxysilane stellen jedoch einen außerordentlich hohen Kostenfaktor dar. Eine erhebliche Kostensenkung kann durch die Verwendung von Wasserglas als Ausgangsmaterial für die Herstellung der SiO₂-Gele erreicht werden. Dazu kann beispielsweise aus einer wäßrigen Wasserglaslösung mit Hilfe eines lonenaustauscherharzes eine Kieselsäure hergestellt werden, die durch Zugabe einer Base zu einem SiO₂-Gel polykondensiert. Nach Austausch des wäßrigen Mediums gegen ein geeignetes organisches Lösungsmittel wird dann in einem weiteren Schritt das erhaltene Gel mit einem chlorhaltigen Silylierungsmittel umgesetzt. Das dabei entstehende, auf der Oberfläche z. B. mit Methylsilylgruppen modifizierte SiO₂-Gel kann anschließend ebenfalls aus einem organischen Lösungsmittel heraus an der Luft getrocknet werden. Das auf dieser Technik basierende Herstellungsverfahren ist in der DE-A-43 42 548 offenbart.

In der EP-A-0 690 023 wird ein Verfahren zur Herstellung von Aerogelen offenbart, bei dem man eine wäßrige Wasserglaslösung mit Hilfe eines sauren lonentauscherharzes oder einer Mineralsäure ansäuert, die dabei entstandene Kieselsäure durch Zugabe einer Base zu einem SiO₂-Gel polykondensiert, aus dem erhaltenen Gel das Wasser durch extraktive Destillation mit einem organischen Lösungsmittel entfernt, das mit Wasser ein sich beim Abkühlen in zwei Phasen trennendes Azeotrop bildet, das Gel mit einem Silylierungsmittel umsetzt, und dann unterkritisch trocknet.

In der DE-C-19502453 wird darüber hinaus die Verwendung von chlorfreien Silylierungsmitteln bei der Herstellung von unterkritisch getrockneten Aerogelen beschrieben.

In der DE-A-19534198 wird ferner eine Organofunktionalisierung mittels entsprechender Silylierungsmittel bei der Herstellung von unterkritisch getrockneten Aerogelen beschrieben.

Darüber hinaus wird in der DE-A-19541279 die Herstellung von hydrophoben, unterkritisch getrockneten Aerogelen beschrieben. Dabei wird in dem Herstellungsprozeß auf die teuren Silylierungsmittel, die dem späteren Aerogel eine dauerhafte Hydrophobizität verleihen, bewußt verzichtet und statt dessen mittels billigerer Alkohole ein Aerogel mit sauerstoffgebundenen hydrophoben Oberflächengruppen dargestellt. Dadurch ist jedoch das beschriebene Aerogel nur kurzfristig hydrophob.

In der DE-A-19541715 und der DE-A-19541992 wird ein verbessertes Verfahren beschrieben, bei dem aus einer wäßrigen Wasserglaslösung mit Hilfe einer Säure ein Kieselsäuresol mit einem pH-Wert ≤ 4,0 hergestellt wird, das anschließend in einem zweiten Schritt durch Zugabe einer Base zu einem SiO₂-Gel polykondensiert. Die verwendete Säure bildet dabei mit den Kationen des Wasserglases ein schwerlösliches Salz, das in einem weiteren Verfahrensschritt abgetrennt wird. Das Aerogel wird durch eine anschließende organische Oberflächenmodifikation und unterkritische Trocknung erhalten.

Bei allen Verfahren zur unterkritischen Trocknung von SiO₂-Aerogelen auf Basis von Wasserglas, die aus dem Stand der Technik bekannt sind, wird das erforderliche SiO₂-Gel in zwei Stufen hergestellt. In einem ersten Schritt wird ein saures Kieselsäuresol aus Wasserglas entweder mit Hilfe eines sauren lonenaustauscherharzes oder einer Säure hergestellt. Dabei wird ein pH-Wert ≤ 4,0 eingestellt, um zu gewährleisten, daß das Kieselsäuresol kurzzeitig stabil ist. In einem zweiten Schritt wird dann das Kieselsäuresol zur Bildung eines SiO₂-Gels mit einer Base versetzt.

Diese zweistufigen Verfahren haben den Nachteil, daß sie zum einen kostenintensiv sind und zum anderen kompliziert zu steuern sind. Die Schwierigkeit der Steuerung beruht unter anderem darauf, daß das zunächst gebildete Kieselsäuresol nur kurzzeitig stabil ist und sich die Solstruktur ständig ändert.

Aufgabe der vorliegenden Erfindung war es daher, ein Verfahren bereitzustellen, mit dem sich organisch modifizierte Aerogele einfach herstellen lassen.

Diese Aufgabe wird gelöst durch ein Verfahren zur Herstellung von organisch modifizierten Aerogelen, bei dem man
a) aus einer wäßrigen Wasserglaslösung mit Hilfe mindestens einer organischen Säure, einer anorganischen Säure und/oder einer salzsauren Lösung über die Zwischenstufe eines Kieselsäuresols ein SiO₂-Gel erhält,
b) das in Schritt a) erhaltene Gel mit einem organischen Lösungsmittel solange wäscht, bis der Wassergehalt des Gels ≤ 5 Gew.% ist,
c) das in Schritt b) erhaltene Gel oberflächensilyliert, und
d) das in Schritt c) erhaltene oberflächensilylierte Gel unterkritisch trocknet, dadurch gekennzeichnet, daß man als Zwischenstufe ein Kieselsäuresol herstellt, das einen pH-Wert im Bereich von 4 bis 8 aufweist, indem man mindestens eine Säure vorlegt und in diese unter schneller Durchmischung die wäßrige Wasserglaslösung zugibt, wobei sich durch die Bildung des Kieselsäuresols unter gleichzeitiger Polykondensation das SiO₂-Gel bildet.

Vorzugsweise ist der pH-Wert ≥4 und ≤6. Der Vorteil des erfindungsgemäßen Verfahrens liegt darin, daß sich das SiO₂-Gel in Sekundenschnelle in einem Schritt durch Bildung eines Kieselsäuresols unter gleichzeitiger Polykondensation bildet. Darüber hinaus sind die erfindungsgemäß hergestellten Aerogele vorzugsweise dauerhaft hydrophob.

Als Wasserglaslösung wird in Schritt a) im allgemeinen eine 6 bis 25 gew.%ige (bezogen auf den SiO₂-Gehalt) Natrium- und/oder Kaliumwasserglaslösung verwendet. Bevorzugt ist eine 10 bis 25 gew.%ige Wasserglaslösung, besonders bevorzugt eine 10 bis 18 gew.%ige Wasserglaslösung.
Femer kann die Wasserglaslösung bezogen auf SiO₂ bis zu 90 Gew.% zur Kondensation befähigte Zirkonium-, Aluminium-, Zinn-, Gallium-, Indium- und/oder Titan-Verbindungen, vorzugsweise Zirkonium-, Aluminium- und/oder Titan-Verbindungen, enthalten.

Als Säuren werden allgemein 1 bis 50 gew.%ige Säuren verwendet, bevorzugt 1 bis 10 gew.%ige Säuren. Bevorzugte Säuren sind Schwefel-, Phosphor-, Fluß-, Oxalund Salzsäure. Besonders bevorzugt ist Salzsäure, insbesondere eine 3 bis 7 gew.-%ige. Es können auch Mischungen der entsprechenden Säuren eingesetzt werden.

Falls man salzsaure Lösungen einsetzt, sind vor allem Aluminiumsalze geeignet, insbesondere Aluminiumsulfat und/oder -chlorid.

Neben dem eigentlichen Mischen der Wasserglaslösung und der Säure ist es darüber hinaus auch möglich zunächst einen Teil der Säure in die Wasserglaslösung zu geben, bis ein pH-Wert ≥ 8 erhalten wird und in einem weiteren Schritt den oben genannten pH-Wert des Sols einzustellen und/oder zunächst einen Teil der Wasserglaslösung in die Säure zu geben, bis der pH-Wert ≤ 4 ist und in einem weiteren Schritt den endgültigen pH-Wert einzustellen. Auf diese Weise ist es möglich, das Verhältnis der Stoffströme Wasserglaslösung/Säure über einen sehr breiten Bereich zu variieren.

Nach dem Mischen der beiden Lösungen sollte bevorzugt ein 5 bis 12 gew.%iges SiO₂-Gel erhalten werden. Besonders bevorzugt ist ein 6 bis 9 gew.%iges SiO₂-Gel.

Um eine möglichst gute Durchmischung der Wasserglaslösung und der Säure zu gewährleisten, bevor sich das SiO₂-Gel ausbildet, sollten beide Lösungen vorzugsweise unabhängig voneinander eine Temperatur zwischen 0 und 30°C, besonders bevorzugt zwischen 5 und 25°C und insbesondere zwischen 10 und 20°C aufweisen. Wird eine Säure eingesetzt, die schwerlösliche Salze mit den Natrium- undloder Kaliumionen des Wasserglases bildet, so sollte die Temperatur nicht so stark gesenkt werden, daß diese kristallin ausfallen. Dadurch könnten Defekte in der sich bildenden SiO₂-Struktur auftreten.

Die schnelle Durchmischung der beiden Lösungen erfolgt in dem Fachmann bekannten Vorrichtungen, wie z.B. Rührkessel, Mischdüsen und statische Mischer. Bevorzugt sind halbkontinuierliche oder kontinuierliche Verfahren, wie z.B. Mischdüsen.

Gegebenenfalls kann in Schritt a) gleichzeitig ein Formgebungsschritt, z.B. durch Spray-forming, Extrusion oder Tropfenbildung, erfolgen.

Vor Schritt b) läßt man das Gel vorzugsweise altem, und zwar im allgemeinen bei 20 bis 100°C, vorzugsweise bei 40 bis 100°C, insbesondere bei 80 bis 100°C und einem pH-Wert von 2,5 bis 11, vorzugsweise 4 bis 8. Die Zeit dafür beträgt im allgemeinen 1 Sekunde bis 12 Stunden, vorzugsweise 1 Sekunde bis 5 Stunden und besonders bevorzugt 1 Sekunde bis 2 Stunden.

Vor Schritt b) wird das Gel vorzugsweise mit Wasser gewaschen, besonders bevorzugt solange bis das verwendete Waschwasser elektrolytfrei ist. Falls eine Alterung des Gels durchgeführt wird, kann das Waschen dabei vor und/oder nach der Alterung durchgeführt werden, wobei das Gel in diesem Fall vorzugsweise nach der Alterung gewaschen wird.

Zum Waschen können auch Mischungen aus Wasser und einem Lösungsmittel aus Schritt b) verwendet werden. Der Wassergehalt sollte jedoch vorzugsweise so hoch sein, daß die Salze in den Poren des Hydrogels nicht auskristallisieren.

Um die Natrium- undloder Kaliumionen weitestgehend zu entfernen, kann das Hydrogel vor, während und/oder nach dem Waschen mit Wasser auch mit einer Mineralsäure gewaschen werden. Bevorzugte Mineralsäuren sind dabei die ebenfalls in Schritt a) als bevorzugt genannten Mineralsäuren.

In Schritt b) wäscht man das aus Schritt a) erhaltene Gel mit einem organischen Lösungsmittel solange, bis der Wassergehalt des Gels ≤ 5 Gew.%, vorzugsweise ≤ 3 Gew.% und besonders bevorzugt ≤1 Gew.% ist. Als Lösungsmittel werden im allgemeinen aliphatische Alkohole, Ether, Ester oder Ketone sowie aliphatische oder aromatische Kohlenwasserstoffe verwendet. Man kann auch Gemische aus den genannten Lösungsmitteln verwenden. Bevorzugte Lösungsmittel sind Methanol, Ethanol, Aceton, Tetrahydrofuran, Essigsäureethylester, Dioxan, Pentan, n-Hexan, n-Heptan und Toluol. Besonders bevorzugt ist Aceton als Lösungsmittel. Man kann auch Gemische aus den genannten Lösungsmitteln verwenden. Ferner kann auch zuerst das Wasser mit einem wassermischbaren Lösungsmittel, z.B. einem Alkohol, Aceton oder THF ausgewaschen und dann dieses Lösungsmittel mit einem Kohlenwasserstoff ausgewaschen werden. Als Kohlenwasserstoff wird vorzugsweise Pentan oder n-Heptan verwendet.

In Schritt c) wird das lösungsmittelhaltige Gel mit einem Silylierungsmittel umgesetzt. Als Silylierungsmittel werden vorzugsweise Silane der Formeln R¹₄₋ₙSiClₙ oder R¹₄₋ₙSi(OR²)ₙ mit n = 1 bis 3 eingesetzt, wobei R¹ und R² unabhängig voneinander, gleich oder verschieden, C₁-C₆-Alkyl, Cyclohexyl oder Phenyl sind. Auch Isopropenoxysilane sowie Silazane sind geeignet. Besonders bevorzugt verwendet man Trimethylchlorsilan. Darüber hinaus können alle dem Fachmann bekannten Silylierungsmittel eingesetzt werden. Die Umsetzung wird im allgemeinen bei 20 bis 100°C, vorzugsweise 20 bis 70°C, durchgeführt, vorzugsweise in einem Lösungsmittel. Gegebenenfalls kann die Silylierung durch einen Katalysator, beispielsweise eine Säure oder Base, beschleunigt werden.

Vor Schritt d) wird das silylierte Gel vorzugsweise mit einem protischen oder aprotischen Lösungsmittel gewaschen, bis unumgesetztes Silylierungsmittel im wesentlichen entfernt ist (Restgehalt ≤ 1 Gew.%). Geeignete Lösungsmittel sind dabei die bei Schritt b) genannten. Analog sind die dort als bevorzugt genannten Lösungsmittel auch hier bevorzugt.

In Schritt d) wird das silylierte, und vorzugsweise gewaschene Gel unterkritisch getrocknet, vorzugsweise bei Temperaturen von -30 bis 200°C, besonders bevorzugt 0 bis 100°C, sowie Drücken vorzugsweise von 0,001 bis 20 bar, besonders bevorzugt 0,01 bis 5 bar, insbesondere 0,1 bis 2 bar, beispielsweise durch Strahlungs-, Konvektions- und/oder Kontakttrocknung. Die Trocknung wird im allgemeinen so lange fortgeführt, bis das Gel einen Lösungsmittel-Restgehalt von weniger als 0,1 Gew.% aufweist Die nach der Trocknung erhaltenen Aerogele sind dauerhaft hydrophob.

In einer weiteren Ausführungsform kann das Gel je nach Anwendung vor der Silylierung im Schritt c) noch einer Netzwerkverstärkung unterworfen werden. Dies geschieht, indem man das erhaltene Gel mit einer Lösung eines zur Kondensation befähigten Orthosilikates der Formel R¹₄₋ₙSi(OR²)ₙ, vorzugsweise ein Alkylund/oder Arylorthosilikat, wobei n = 2 bis 4 ist und R¹ und R² unabhängig voneinander Wasserstoffatome, lineare oder verzweigte C₁-C₆-Alkyl-, Cyclohexyloder Phenyl-Reste sind, oder mit einer wäßrigen Kieselsäure-Lösung umsetzt.

In einer weiteren Ausführungsform kann das Gel nach der formgebenden Polykondensation in Schritt a) und/oder jedem nachfolgenden Verfahrensschritt nach dem Fachmann bekannten Techniken, wie z.B. Mahlen, zerkleinert werden.

Des weiteren können dem Wasserglas, der Säure und/oder dem Sol vor der Gelherstellung Trübungsmittel als Zusatzstoffe, insbesondere IR-Trübungsmittel zur Reduktion des Strahlungsbeitrages der Wärmeleitfähigkeit, wie z.B. Ruß, Titanoxid, Eisenoxide und/oder Zirkonoxid zugesetzt werden.

In einer weiteren Ausführungsform können dem Wasserglas, der Säure und/oder dem Sol zur Erhöhung der mechanischen Stabilität Fasern zugesetzt werden. Als Fasermaterialien können anorganische Fasern, wie z.B. Glasfasern oder Mineralfasern, organische Fasern, wie z.B. Polyesterfasern, Aramidfasern, Nylonfasern oder Fasern pflanzlichen Ursprungs, sowie Gemische derselben verwendet werden. Die Fasern können auch beschichtet sein, z.B. Polyesterfasern, die mit einem Metall wie z.B. Aluminium metallisiert sind.

Die erfindungsgemäß hergestellten Aerogele finden insbesondere Verwendung als Wärmeisolationsmaterialien.

Das erfindungsgemäße Verfahren wird im folgenden anhand von Ausführungsbeispielen näher beschrieben, ohne dadurch beschränkt zu werden.

### Beispiel 1

2043 g einer auf 10°C gekühlten 5,46 gew.-%igen HCI-Lösung wird tropfenweise mit 2043 g einer auf 10°C gekühlten 16 gew.-%igen Natriumwasserglaslösung (mit einem Gehalt von 13 Gew.% SiO₂ und einem Na₂O:SiO₂ Verhältnis von 1:3,3) versetzt. Dabei stellt sich ein pH-Wert von 4,7 ein. Das nach einigen Sekunden gebildete Hydrogel wird 1 Stunde bei 85°C gealtert. Anschließend wird es mit 3 l warmem Wasser gewaschen und das Wasser mit 3 l Aceton gegen Aceton ausgetauscht. Danach wird das acetonhaltige Gel mit Trimethylchlorsilan silyliert (10 Gew.-% Trimethylchlorsilan pro Gramm nasses Gel). Die Trocknung des Gels erfolgt an Luft (3 Stunden bei 40°C, dann 2 Stunden bei 50°C und 12 Stunden bei 150°C).

Das so erhaltene Aerogel hat eine Dichte von 0,12 g/cm³, eine Wärmeleitfähigkeit von 17 mW/mK, eine spezifische Oberfläche nach BET von 771 m²/g und ist dauerhaft hydrophob. Die C/H/N-Analyse ergibt 10,7 Gew.-% C und 3,1 Gew.-% H.

### Beispiel 2

2500 g einer auf 10°C gekühlten 8 %igen Schwefelsäure wird tropfenweise mit 2500 g einer auf 10°C gekühlten 25,5 gew.-%igen Natriumwasserglaslösung (mit einem Gehalt von 13 Gew.-% SiO₂ und einem Na₂O:SiO₂ Verhältnis von 1:3,3) versetzt. Dabei stellt sich ein pH-Wert von 6,3 ein. Das nach einigen Sekunden gebildete Hydrogel wird 1 Stunde bei 85°C gealtert. Anschließend wird es mit 3 l warmem Wasser gewaschen und das Wasser mit 3 l Aceton gegen Aceton ausgetauscht. Danach wird das acetonhaltige Gel mit Trimethylchlorsilan silyliert (5 Gew.-% Trimethylchlorsilan pro Gramm nasses Gel). Die Trocknung des Gels erfolgt an Luft (3 Stunden bei 40°C, dann 2 Stunden bei 50°C und 12 Stunden bei 150°C).

Das so erhaltene Aerogel hat eine Dichte von 0,154 g/cm³, eine Wärmeleitfähigkeit von 21 mW/mK, eine spezifische Oberfläche nach BET von 630 m²/g und ist dauerhaft hydrophob. Die C/H/N-Analyse ergibt 7,7 Gew.-% C und 1,9 Gew.-% H.

Die Wärmeleitfähigkeit wurde mit einer Heizdrahtmethode (s. z.B. O. Nielsson, G. Rüschenpöhler, J. Groß, J. Fricke, High Temperatures - High Pressures, Vol. 21, 267-274 (1989)) gemessen.

## Patentansprüche

1. Verfahren zur Herstellung von organisch modifizierten Aerogelen, bei dem man
a) aus einer wäßrigen Wasserglaslösung mit Hilfe mindestens einer organischen Säure, einer anorganischen Säure und/oder einer salzsauren Lösung über die Zwischenstufe eines Kieselsäuresols ein SiO₂-Gel erhält,
b) das in Schritt a) erhaltene Gel mit einem organischen Lösungsmittel solange wäscht, bis der Wassergehalt des Gels ≤ 5 Gew.% ist,
c) das in Schritt b) erhaltene Gel oberflächensilyliert, und
d) das in Schritt c) erhaltene oberflächensilylierte Gel unterkritisch trocknet,
**dadurch gekennzeichnet, daß** man als Zwischenstufe ein Kieselsäuresol herstellt, das einen pH-Wert im Bereich von 4 bis 8 aufweist, indem man mindestens eine Säure vorlegt und in diese unter schneller Durchmischung die wäßrige Wasserglaslösung zugibt, wobei sich durch die Bildung des Kieselsäuresols unter gleichzeitiger Polykondensation das SiO₂-Gel bildet.

2. Verfahren gemäß Anspruch 1, **dadurch gekennzeichnet, daß** man als Wasserglaslösung eine 6 bis 25 gew.%ige Natrium- und/oder Kaliumwasserglaslösung verwendet.

3. Verfahren gemäß Anspruch 1 oder 2, **dadurch gekennzeichnet, daß** man als Säure Schwefel-, Phosphor-, Fluß-, Oxal- und/oder Salzsäure verwendet

4. Verfahren gemäß mindestens einem der vorhergehenden Ansprüche, **dadurch gekennzeichnet, daß** die Temperaturen der eingesetzten Wasserglaslösung und der eingesetzten Säure unabhängig voneinander im Bereich von 0 bis 30°C liegen.

5. Verfahren gemäß mindestens einem der vorhergehenden Ansprüche, **dadurch gekennzeichnet, daß** man das in Schritt a) erhaltene Gel vor Schritt b) bei 20 bis 100°C und einem pH-Wert von 2,5 bis 11 für die Dauer von 1 Sekunde bis 12 Stunden altem läßt.

6. Verfahren gemäß mindestens einem der vorhergehenden Ansprüche, **dadurch gekennzeichnet, daß** man das in Schritt a) erhaltene Gel vor Schritt b) mit Wasser wäscht.

7. Verfahren gemäß mindestens einem der vorhergehenden Ansprüche, **dadurch gekennzeichnet, daß** man als organische Lösungsmittel in Schritt b) aliphatische Alkohole, Ether, Ester, Ketone, aliphatische undloder aromatische Kohlenwasserstoffe verwendet.

8. Verfahren gemäß mindestens einem der vorhergehenden Ansprüche, **dadurch gekennzeichnet, daß** man in Schritt c) als Silylierungsmittel mindestens ein Silan der Formeln R¹₄₋ₙSiClₙ oder R¹₄₋ₙSi(OR²)ₙ mit n = 1 bis 3 einsetzt, wobei R¹ und R² unabhängig voneinander, gleich oder verschieden, C₁-C₆-Alkyl, Cyclohexyl oder Phenyl sind.

9. Verfahren gemäß mindestens einem der vorhergehenden Ansprüche, **dadurch gekennzeichnet, daß** man das oberflächensilylierte Gel vor Schritt d) mit einem protischen oder aprotischen Lösungsmittel wäscht.

10. Verfahren gemäß mindestens einem der vorhergehenden Ansprüche, **dadurch gekennzeichnet, daß** man in Schritt d) das silylierte Gel bei Temperaturen von -30 bis 200°C und Drücken von 0,001 bis 20 bar trocknet.

11. Verfahren gemäß mindestens einem der vorhergehenden Ansprüche, **dadurch gekennzeichnet, daß** man das in Schritt a) erhaltene Gel vor der Oberflächenmodifizierung mit einer Lösung eines zur Kondensation befähigten Orthosilikates der Formel R¹₄₋ₙSi(OR²)ₙ, wobei n = 2 bis 4 ist und R¹ und R² unabhängig voneinander Wasserstoffatome, lineare oder verzweigte C₁-C₆-Alkyl-, Cyclohexyl- oder Phenyl-Reste sind, oder mit einer wäßrigen Kieselsäure-Lösung umsetzt.

12. Verfahren gemäß mindestens einem der vorhergehenden Ansprüche, **dadurch gekennzeichnet, daß** man der Wasserglaslösung, der Säure und/oder dem Sol Fasern zusetzt.

13. Verfahren gemäß mindestens einem der vorhergehenden Ansprüche, **dadurch gekennzeichnet, daß** man dem Wasserglas, der Säure und/oder dem Sol Trübungsmittel, insbesondere IR-Trübungsmittel, zusetzt.

14. Verfahren gemäß mindestens einem der vorhergehenden Ansprüche, **dadurch gekennzeichnet, daß** man das erhaltene Gel nach Schritt a) und/oder jedem nachfolgenden Verfahrensschritt zerkleinert.

## Claims

1. Procedure for the manufacture of organically modified aerogels, whereby
a) a SiO₂ -gel is obtained from an aqueous solution of waterglass with the aid of at least one / an organic acid, an inorganic acid and / or a hydrochloric acid solution via the intermediate stage of a silicic acid sol,
b) the gel obtained in step a) is washed with an organic solvent until the water content of the gel reduces to ≤ 5% by weight,
c) the gel obtained in step B is silylated on its surface, and
d) the surface-silylated gel obtained in step c) is dried sub-critically,
**characterised in that** a silicic acid sol exhibiting a pH range of between 4 and 8 is produced as an intermediate stage by adding the aqueous solution of waterglass to at least one acid with rapid and thorough mixing which results in the formation of silicic acid sol with the simultaneous poly-condensation of the SiO₂-gel.

2. Procedure in accordance with claim 1, **characterised in that** a 6 to 25% by weight solution of sodium- and / or potassium waterglass is used as the waterglass solution.

3. Procedure in accordance with claim 1 or 2, **characterised in that** sulphuric-, phosphoric-, hydrofluoric acid, oxalic- and / or hydrochloric acid is used as the acid.

4. Procedure in accordance with at least one of the foregoing claims, **characterised in that** independently of one another the temperatures of the waterglass solution and the acid employed lie within the range between 0 and 30 °C.

5. Procedure in accordance with at least one of the foregoing claims, **characterised in that** before proceeding to step b) the gel obtained in step a) is aged for a period of between 1 second and 12 hours at between 20 and 100 °C and at a pH of between 2.5 and 11.

6. Procedure in accordance with at least one of the foregoing claims **characterised in that** the gel obtained in step a) is washed with water before proceeding to step b).

7. Procedure in accordance with at least one of the foregoing claims, **characterised in that** aliphatic alcohols, ethers, esters, ketones, aliphatic- and / or aromatic hydrocarbons are used as the organic solvents in step b).

8. Procedure in accordance with at least one of the foregoing claims, **characterised in that** the silylating agents employed in step c) consist of at least one silane of the formula R¹₄₋ₙSiClₙ or R¹₄₋ₙSi(OR²)ₙ where n = 1 to 3 and where independently of one another R¹ and R² consist of the same or different C₁-C₆-alkyl-, cyclohexyl or phenyl groups.

9. Procedure in accordance with at least one of the foregoing claims, **characterised in that** before taking step d) the surface-silylated gel is washed with a protic or aprotic solvent.

10. Procedure in accordance with at least one of the foregoing claims, **characterised in that** in step d) the silylated gel is dried at temperatures of between -30 and 200 °C and under pressures of between 0.001 and 20 bar.

11. Procedure in accordance with at least one of the foregoing claims, **characterised in that** before receiving the surface-modifying treatment the gel obtained in step a) is reacted with either an silicic acid solution or a solution of an orthosilicate capable of condensation and having the formula R¹₄₋ₙSi(OR²)ₙ where n has a value of between 2 and 4 and - independently of one another - R¹ and R² consist of hydrogen atoms, linear or branched C₁-C₆-alkyl-, cyclohexyl or phenyl residues.

12. Procedure in accordance with at least one of the foregoing claims, **characterised in that** fibres are added to the waterglass solution, the acid and / or the sol.

13. Procedure in accordance with at least one of the foregoing claims, **characterised in that** opacifying agents and, in particular, IR-opacifying agents are added to the waterglass, the acid and / or the sol.

14. Procedure in accordance with at least one of the foregoing claims, **characterised in that** the gel obtained is comminuted after step a) and/or after each subsequent step of the procedure.

## Revendications

1. Procédé pour la préparation d'aérogels modifiés par voie organiques dans lequel
a) on obtient un gel de SiO₂ à partir d'une solution aqueuse de verre soluble à l'aide d'au moins un acide organique, d'un acide inorganique et/ou d'une solution acide par l'acide chlorhydrique en passant par l'étape intermédiaire d'un sol d'acide silicique,
b) on lave le gel obtenu à l'étape a) par un solvant organique jusqu'à ce que le gel présente une teneur en eau ≤5 % en masse,
c) on effectue une silylation de la surface du gel obtenu à l'étape b), et
d) on sèche sous conditions sub-critiques le gel silylé à la surface obtenu à l'étape c),
**caractérisé en ce qu'**on prépare comme étape intermédiaire un sol d'acide silicique, dont le pH se trouve dans le domaine de 4 à 8, en plaçant au moins un acide et en ajoutant à celui-ci en brassant rapidement la solution aqueuse de verre soluble pendant qu'il se forme le gel de SiO₂ suite à la formation du sol d'acide silicique sous polycondensation simultanée.

2. Procédé selon la revendication 1, **caractérisé en ce qu'**on utilise en tant que solution de verre soluble une solution de 6 à 25 % en masse de verre soluble sodique et/ou de potassique.

3. Procédé selon la revendication 1 ou 2, **caractérisé en ce qu'**on utilise comme acide l'acide sulfurique, l'acide phosphorique, l'acide fluorhydrique, l'acide oxalique et/ou chlorhydrique.

4. Procédé selon au moins l'une des revendications précédentes, **caractérisé en ce que** les températures de la solution de verre soluble utilisée et de l'acide utilisé indépendamment l'une de l'autre se trouvent dans le domaine de 0 à 30°C.

5. Procédé selon au moins l'une des revendications précédentes, **caractérisé en ce que**, avant l'étape b), on laisse vieillir le gel obtenu à l'étape a) à une température de 20 à 100°C et une valeur de pH de 2,5 à 11 pendant une durée de 1 seconde à 12 heures.

6. Procédé selon au moins l'une des revendications précédentes, **caractérisé en ce que**, avant l'étape b), on lave à l'eau le gel obtenu à l'étape a).

7. Procédé selon au moins l'une des revendications précédentes, **caractérisé en ce qu'**on utilise à l'étape b) comme solvants organiques des alcools aliphatiques, des éthers, des esters, des cétones, des hydrocarbures aliphatiques et/ou aromatiques.

8. Procédé selon au moins l'une des revendications précédentes, **caractérisé en ce qu'**on utilise à l'étape c) comme agent de silylation au moins un silane de formules R¹₄₋ₙSiClₙ ou R¹₄₋ₙSi(OR²)ₙ avec n = 1 à 3, R¹ et R² indépendamment l'un de l'autre identiques ou différents représentent un groupe alkyle en C₁-C₆, cyclohexyle ou phényle.

9. Procédé selon au moins l'une des revendications précédentes, **caractérisé en ce qu'**on lave avant l'étape d) le gel silylé à la surface par un solvant protique ou aprotique.

10. Procédé selon au moins l'une des revendications précédentes, **caractérisé en ce que**, avant l'étape d), on sèche le gel silylé à une température de -30 à 200°C et des pressions de 0,001 à 20 bars.

11. Procédé selon au moins l'une des revendications précédentes, **caractérisé en ce que**, avant la modification de la surface, on fait réagir le gel obtenu à l'étape a) sur une solution d'un orthosilicate apte à la condensation de formule R¹₄₋ₙSi(OR²)ₙ avec n = 2 à 4, R¹ et R² indépendamment l'un de l'autre représentent des atomes d'hydrogène, des restes alkyle en C₁-C₆ linéaires ou ramifiés, cyclohexyle ou phényle, ou sur une solution aqueuse d'acide silicique.

12. Procédé selon au moins l'une des revendications précédentes, **caractérisé en ce qu'**on ajoute des fibres à la solution de verre soluble, à l'acide et/ou au sol.

13. Procédé selon au moins l'une des revendications précédentes, **caractérisé en ce qu'**on ajoute au verre soluble, à l'acide et/ou au sol des agents opacifiants, en particulier des agents opacifiants IR.

14. Procédé selon au moins l'une des revendications précédentes, **caractérisé en ce qu'**on fragmente après l'étape a) et/ou chacune des étapes suivantes, le gel obtenu.
